# EUROPÄISCHE PATENTANMELDUNG

(11) **EP 0 953 492 A2**
(43) Veröffentlichungstag der Anmeldung: **03.11.1999**
(21) Anmeldenummer: 99107067.3
(22) Anmeldetag: 10.04.1999
(51) Int. Cl.: B62D 1/18

(54) **Stellzylinder für eine Lenkungsanordnung eines Kraftfahrzeugs**

(30) Priorität: 02.05.1998 DE 19819712
(71) Anmelder: DaimlerChrysler AG, 70567 Stuttgart (DE)
(72) Erfinder: Schremmer, Gottfried, 71732 Tamm (DE)

(57) **Zusammenfassung**

Bei einer bekannten Lenksäulenanordnung ist ein Stellzylinder (8) vorgesehen, um zwei teleskopförmig gegeneinander verschiebbare Mantelrohrteile relativ zueinander zu verschieben.

Erfindungsgemäß ist als Dichtmittel wenigstens eine flexible Dichtlippe (19) vorgesehen, die in ihrer unbelasteten Ruheposition den Durchströmquerschnitt (16) freigibt, und die bei einer schlagartigen Relativbewegung von der Höhe einer Aufprallbelastung in eine den Durchströmquerschnitt (16) zumindest weitgegend abdichtende Schließposition verformbar ist, wobei der Verformungswiderstand der wenigstens einen Dichtlippe (19) so gewählt ist, daß die Dichtlippe (19) bei normalen Stellvorgängen zwischen Kolbenstange und Zylindergehäuse in ihrer Ruheposition verbleibt.

Einsatz für Lenkungsanordnungen von Personenkraftwagen.

## Beschreibung

Die Erfindung betrifft einen Stellzylinder für eine Lenkungsanordnung eines Kraftfahrzeugs mit einem Zylindergehäuse, in dem ein an einer Kolbenstange festgelegter Kolbenteil linearverschiebbar gelagert ist, der einen Zylinderraum innerhalb des Zylindergehäuses in zueinander axial gegenüberliegende Arbeitskammern unterteilt, die vollständig mit Dämpfungsmedium gefüllt sind, wobei der Kolbenteil wenigstens einen die Arbeitskammern miteinander verbindenden Durchströmquerschnitt aufweist, der durch Dichtmittel verschließbar ist.

Ein solcher Stellzylinder ist für eine Lenksäulenanordnung eines Kraftfahrzeugs aus der EP 0 424 629 B1 bekannt. Die bekannte Lenksäulenanordnung weist zwei teleskopförmig zueinander verschiebbare Mantelrohrteile auf, wobei zur Verschiebung ein achsparallel angeordneter Hydraulikzylinder vorgesehen ist. Das eine Ende des Hydraulikzylinders ist fahrzeugfest angeordnet. Das andere Ende ist an dem verschiebbaren Mantelrohrteil befestigt, so daß eine Betätigung des Hydraulikzylinders eine Verschiebung des einen Mantelrohrteiles relativ zum anderen Mantelrohrteil bewirkt. In dem Hydraulikzylinder ist ein scheibenförmiger Kolbenteil vorgesehen, der an einer axial verschiebbaren Kolbenstange festgelegt ist. Der Kolbenteil unterteilt einen Zylinderraum des Hydraulikzylinders in zwei Arbeitskammern, die vollständig mit Hydrauliköl gefüllt sind. In dem Kolbenteil ist eine Durchflußbohrung vorgesehen, die die beiden Arbeitskammern miteinander verbindet. Die Durchflußbohrung ist durch ein schaltbares Ventil, das als Dichtmittel dient, absperrbar.

Aufgabe der Erfindung ist es, einen Stellzylinder der eingangs genannten Art zu schaffen, mittels dessen ein verbesserter Insassenschutz für einen Fahrer eines Kraftfahrzeugs bei einem Einsatz des Stellzylinders in einer Lenksäulenanordnung geschaffen wird.

Diese Aufgabe wird dadurch gelöst, daß als Dichtmittel wenigstens eine flexible Dichtlippe vorgesehen ist, die in ihrer unbelasteten Ruheposition den Durchströmquerschnitt freigibt, und die bei einer schlagartigen Relativbewegung von der Höhe einer Aufprallbelastung in eine den Durchströmquerschnitt zumindest weitgegend abdichtende Schließposition verformbar ist, wobei der Verformungswiderstand der wenigstens einen Dichtlippe so gewählt ist, daß die Dichtlippe bei normalen Stellvorgängen zwischen Kolbenstange und Zylindergehäuse in ihrer Ruheposition verbleibt. Als Dämpfungsmedium ist bei der erfindungsgemäßen Lösung insbesondere Hydrauliköl vorgesehen. Vorteilhaft für die erfindungsgemäße Lösung ist der Einsatz eines zumindest weitgehend inkompressiblen Dämpfungsmediums. Durch die erfindungsgemäße Lösung wird bei einem Fahrzeugaufprall zwangsläufig eine Relativbewegung zwischen Kolbenteil und Zylindergehäuse und damit auch eine Relativbewegung zwischen einem Mantelrohrteil und der Fahrzeugkarosserie vermieden. Bei einer Aufprallbelastung von der Seite des Lenkrades der Lenksäulenanordnung her wird somit ein Verschieben des Lenkrades in den Cockpitbereich hinein vermieden, so daß das Lenkrad eine sichere Abstützung für die Entfaltung eines Airbags bietet. Bei einer entgegengesetzten Aufprallbelastung von einem Lenkgetriebe der Lenkung her wird zuverlässig vermieden, daß das Lenkrad in den Fahrzeuginnenraum hinein verschoben wird und dort zu Verletzungsgefahren für den Fahrer führt. Durch die erfindungsgemäße Lösung, bei der der Stellzylinder als Dämpfungszylinder gestaltet ist, wird somit ein verbesserter Insassenschutz erzielt. Die wenigstens eine flexible Dichtlippe schafft eine besonders einfache Lösung, um entsprechende Stellbewegungen des Stellzylinders zu blockieren, ohne daß hierzu externe Schaltvorrichtungen benötigt werden.

In Ausgestaltung der Erfindung sind beide, einander gegenüberliegende Stirnöffnungen des wenigstens einen Durchströmquerschnittes mit jeweils wenigstens einer Dichtlippe versehen, wobei die gegenüberliegenden Dichtlippen bei entgegengesetzten Axialbelastungen alternativ in ihre Schließposition verformbar sind. Dadurch wird gewährleistet, daß die Blockierfunktion des Stellzylinders in beiden, entgegengesetzten Axialrichtungen erfolgen kann, so daß sowohl eine fahrzeugfeste Arretierung des entsprechenden Lenksäulenteiles bei Belastungen aus der Richtung des Lenkrades als auch aus der entgegengesetzten Richtung, nämlich aus Richtung des Lenkgetriebes, erfolgen kann.

In weiterer Ausgestaltung der Erfindung ist ein nicht verschließbarer Restdurchströmquerschnitt vorgesehen, der wesentlich kleiner als der verschließbare Durchströmquerschnitt ist. Dadurch kann in dem Stellzylinder Aufprallenergie abgebaut werden, die gleichzeitig eine auf den Fahrer maximal wirkende Höchstbelastung reduzieren kann.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Seitenansicht eine Ausführungsform einer erfindungsgemäßen Lenkungsanordnung für ein Kraftfahrzeug,
- Fig. 2: in vergrößerter Darstellung einen Längsschnitt durch einen Stellzylinder der Lenkungsanordnung nach Fig. 1, und
- Fig. 3: in weiter vergrößerter Darstellung einen Ansschnitt des Stellzylinders nach Fig. 2 auf Höhe eines Kolbenteiles innerhalb eines Zylinderraumes des Stellzylinders.

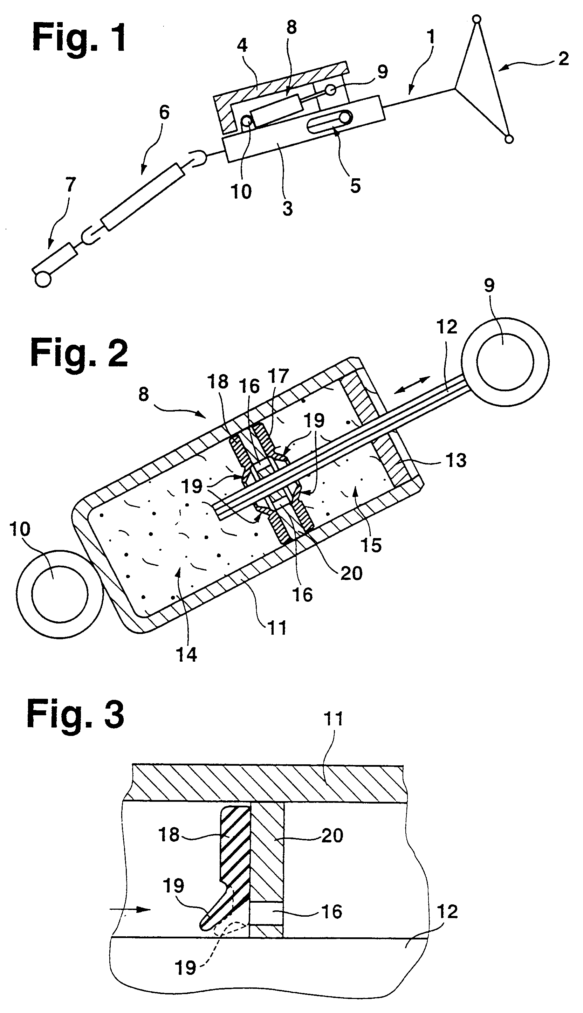

Eine Lenkungsanordnung für ein Kraftfahrzeug nach den Fig. 1 bis 3 weist eine obere Lenkspindel 1 auf, die auf einer in einen Fahrzeuginnenraum ragenden Seite in an sich bekannter Weise ein Lenkrad 2 trägt. Die Lenkspindel 1 ist in einem Mantelrohrteil 3 drehbeweglich gelagert, wobei der Mantelrohrteil 3 relativ zu einer fahrzeugfesten Konsole 4 koaxial zur Spindelachse der Lenkspindel 1 längsverstellbar gehalten ist. Hierzu ist dem Mantelrohrteil eine lediglich schematisiert dargestellte Linearführung 5 zugeordnet. Die Konsole 4 ist an einem nicht näher dargestellten Trägerteil einer Karosserietragstruktur festgelegt. An ihrem dem Lenkrad 2 gegenüberliegenden unteren Stirnende geht die obere Lenkspindel 1 mittels eines Kreuzgelenkes in eine untere Lenkspindel 6 über, die nach unten in ein Lenkgetriebe 7 mündet. Das Lenkgetriebe 7 überträgt entsprechende Lenkbewegungen auf eine Vorderachse des Kraftfahrzeugs.

Eine Längsverstellung des Mantelrohrteiles 3 relativ zur fahrzeugfesten Konsole 4 erfolgt beim dargestellten Ausführungsbeispiel durch eine nicht näher dargestellte Verstellvorrichtung. Der Lenkungsanordnung ist außerdem ein hydraulischer Stellzylinder 8 zugeordnet, der als Dämpfungszylinder wirkt. Bei einem nicht dargestellten Ausführungsbeispiel dient der nachfolgend als Hydraulikzylinder bezeichnete hydraulische Stellzylinder als Dämpfer, wie er nachfolgend beschrieben wird.

Der Hydraulikzylinder 8 ist mit seinem einen Stirnende 9 an der fahrzeugfesten Konsole 4 und mit seinem anderen Stirnende 10 an dem längsbeweglichen Mantelrohrteil 3 angelenkt. Das eine Stirnende 9 ist dabei einer Kolbenstange 12 des Hydraulikzylinders 8 und das andere Stirnende 10 einem Zylindergehäuse 11 des Hydraulikzylinders 8 zugeordnet. Der Hydraulikzylinder 8 verläuft im wesentlichen achsparallel zur Spindelachse der Lenkspindel 1.

Die Kolbenstange 12 ist als polygonales Längsprofil gestaltet und in einer mit einem korresdpondierend profilierten Durchtritt versehenen Deckplatte des Zylindergehäuses 11 in Pfeilrichtung (Fig. 2) linearverschiebbar gelagert. Die Kolbenstange 12 trägt einen scheibenförmigen Kolbenteil 20, der starr mit der Kolbenstange 12 verbunden ist und einen Zylinderraum innerhalb des Zylindergehäuses 11 in zwei axial zueinander beabstandete Arbeitskammern 14, 15 unterteilt. Der gesamte Zylinderraum ist vollständig mit einem Dämpfungsmedium, vorliegend Hydrauliköl, gefüllt. Der Kolbenteil in Form einer Kolbenscheibe 20 trennt die beiden Arbeitskammern 14, 15 grundsätzlich dicht voneinander ab. Die Kolbenscheibe 20 weist jedoch zwei oder mehr als Durchströmquerschnitte dienende Durchtrittsbohrungen 16 auf, mittels derer die Arbeitskammern 14, 15 miteinander in Verbindung stehen. Die Durchtrittsbohrungen 16 sind achsparallel um die Kolbenstange 12 herum verteilt angeordnet.

Den Durchtrittsbohrungen 16 ist im Bereich beider gegenüberliegender Stirnöffnungen jeweils eine flexible Dichtlippe 19 zuge-ordnet, die jeweils Teil eines Dichtscheibenringes 17, 18 sind. Die Dichtscheibenringe 17, 18 sind auf gegenüberliegenden Stirnseiten an der Kolbenscheibe 20 festgelegt und bestehen jeweils aus einem elastischen Kunststoffmaterial. Die einstückig angeformten Dichtlippen 19 sind als Ringprofil gestaltet, wobei die Dichtlippen 19 - ebenfalls ringförmig gestaltet - im unbelasteten Ruhezustand von den Durchtrittsbohrungen 16 schräg nach außen abragen und diese freigeben. Die Dichtlippen 19 sind jedoch an den Dichtscheibenringen 17, 18 derart elastisch verformbar angeordnet, daß sie bei definierten Druckbelastungen entsprechend Fig. 3 gegen die Stirnöffnungen der Durchtrittsbohrungen 16 gedrückt werden, wodurch sie die Durchtrittsbohrungen 16 verschließen. Der Verformungswiderstand der Dichtlippen 19 ist dabei derart gewählt, daß die Dichtlippen 19 bei üblichen Stellvorgängen des Mantelrohrteiles 3 relativ zur Konsole 4 in ihrer die Durchtrittsbohrungen 16 freigebenden Ruheposition verbleiben. Sobald jedoch auf den Mantelrohrteil 3 eine relativ hohe Axialbelastung aufgrund eines Fahrzeugaufpralls einwirkt, erzeugt die entsprechende Relativbeschleunigung zwischen Kolbenstange 12 und Zylindergehäuse 11 einen derart hohen Öldruck in Pfeilrichtung (Fig. 3), daß die Dichtlippe 19 in ihre die Durchtrittsbohrungen 16 verschließende Dichtposition bzw. in definiert geöffneter Position verformt wird. Dadurch wirkt der Hydraulikzylinder 8 als Dämpfungszylinder, wobei er nach Art einer starren Kopplung jegliche Relativbewegung zwischen dem Mantelrohrteil 3 und der Konsole 4 blockiert bzw. definiert bewegen laßt. Der den Dichtscheibenring 18 gegenüberliegende Dichtscheibenring 17 wirkt einschließlich seiner Dichtlippe 19 bei entsprechend entgegengesetzten Axialbelastungen in gleicher Weise wie zuvor beschrieben.

Wesentlich ist somit, daß die Dichtlippen 19 der Dichtscheibenringe 17, 18 während normaler Stellvorgänge in ihrer die Durchtrittsbohrungen freigebenden Ruheposition verbleiben, zusätzlich jedoch bei entsprechend starken, vorzugsweise schlagartigen Axialbelastungen zu einem Verschließen bzw. zu einem Reduzieren der freien Querschnitte der Durchtrittsbohrungen führen.

## Patentansprüche

1. Stellzylinder für eine Lenkungsanordnung eines Kraftfahrzeugs, mit einem Zylindergehäuse, in dem ein an einer Kolbenstange festgelegter Kolbenteil linearverschiebbar gelagert ist, der einen Zylinderraum innerhalb des Zylindergehäuses in zwei einander axial gegenüberliegende Arbeitskammern unterteilt, die vollständig mit einem Dämpfungsmedium gefüllt sind, wobei der Kolbenteil wenigstens einen die Arbeitskammern miteinander verbindenden Durchströmquerschnitt aufweist, der durch Dichtmittel verschließbar ist,
**dadurch gekennzeichnet,**
daß als Dichtmittel wenigstens eine flexible Dichtlippe (19) vorgesehen ist, die in ihrer unbelasteten Ruheposition den Durchströmquerschnitt freigibt, und die bei einer schlagartigen Relativbewegung von der Höhe einer Aufprallbelastung in eine den Durchströmquerschnitt (16) zumindest weitgegend abdichtende Schließposition verformbar ist, wobei der Verformungswiderstand der wenigstens einen Dichtlippe (19) so gewählt ist, daß die Dichtlippe (19) bei normalen Stellvorgängen zwischen Kolbenstange (12) und Zylindergehäuse (11) in ihrer Ruheposition verbleibt.

2. Stellzylinder nach Anspruch 1,
**dadurch gekennzeichnet,**
daß beide, einander gegenüberliegende Stirnöffnungen des wenigstens einen Durchströmquerschnittes (16) mit jeweils wenigstens einer Dichtlippe (19) versehen sind, wobei die gegenüberliegenden Dichtlippen (19) bei entgegengesetzten Axialbelastungen alternativ in ihre Schließposition verformbar sind.

3. Stellzylinder nach Anspruch 1 oder 2,
**dadurch gekennzeichnet,**
daß ein nicht verschließbarer Restdurchströmquerschnitt vorgesehen ist, der wesentlich kleiner als der verschließbare Durchströmquerschnitt ist.

4. Lenkungsanordnung für ein Kraftfahrzeug mit einem wenigstens axial verstellbaren Lenksäulenteil, an dem ein zumindest ungefähr achsparallel ausgerichteter Stellzylinder angelenkt ist, dessen anderes Ende karosseriefest angelenkt ist,
**dadurch gekennzeichnet,**
daß der Stellzylinder (8) nach einem der vorhergehenden Ansprüche aufgebaut ist.
